# EUROPÄISCHE PATENTSCHRIFT

(11) **EP 1 714 818 B1**
(45) Veröffentlichungstag und Bekanntmachung des Hinweises auf die Patenterteilung: **05.03.2008**
(21) Anmeldenummer: 05103119.3
(22) Anmeldetag: 19.04.2005
(51) Int. Cl.: B60K 6/22

(54) **Doppelkupplungsgetriebe**
Double clutch tranmission
Transmission à embrayage double

(43) Veröffentlichungstag der Anmeldung: 25.10.2006
(73) Patentinhaber: Getrag Ford Transmissions GmbH, 50725 Köln (DE)
(72) Erfinder: Eggert, Ulrich, 41751, Viersen (DE); Krauss, Christian, 50737 Köln (DE); Leibbrandt, Martin, 50181, Bedburg (DE)

(56) Entgegenhaltungen:
- DE-A1- 10 160 884
- DE-A1- 19 850 549
- US-A1- 2002 088 288
- US-A1- 2002 088 290
- US-A1- 2002 088 291

## Beschreibung

Die Erfindung betrifft ein Doppelkupplungsgetriebe insbesondere für ein Kraftfahrzeug.

Aus der US 6,499,370 beispielsweise ist ein Doppelkupplungsgetriebe bekannt, das eine erste Kupplung und eine zweite Kupplung umfasst, die koaxial zueinander angeordnet sind und demzufolge eine gemeinsame Drehachse aufweisen. Des weiteren umfasst das Doppelkupplungsgetriebe eine erste Eingangswelle und eine zweite Eingangswelle. Dabei lässt sich die erste Eingangswelle über die erste Kupplung mit einem Motor verbinden. Die zweite Eingangswelle kann über die zweite Kupplung mit dem Motor verbunden werden.

Über mehrere schaltbare Zahnradpaare lässt sich ein Drehmoment von den Eingangswellen auf eine Ausgangswelle übertragen. Ein Zahnradpaar besteht dabei aus einem Festrad und einem Losrad. Dem Losrad ist jeweils eine Gangschaltkupplung zugeordnet, durch die das Losrad mit der Welle, auf der das Losrad angeordnet ist, drehfest verbunden werden kann. Bei geschlossener Gangschaltkupplung überträgt das Zahnradpaar ein Drehmoment von einer der Eingangswellen auf die Ausgangswelle.

Um einen seriellen und/oder parallelen Hybridmodus des Doppelkupplungsgetriebes zu ermöglichen, weist das Doppelkupplungsgetriebe der US 6,499,370 eine erste Antriebseinheit und eine zweite Antriebseinheit auf. Die beiden Antriebseinheiten sind dabei jeweils als Elektromaschinen ausgebildet, die koaxial zu den beiden Kupplungen und koaxial zu den beiden Eingangswellen angeordnet sind.

Durch die koaxiale Anordnung der beiden Kupplungen, der beiden Eingangswellen mit den darauf angeordneten Festrädern bzw. Losrädern inklusive Gangschaltkupplungen sowie durch die dazu koaxial angeordneten Elektromaschinen weist das Doppelkupplungsgetriebe eine vergleichsweise große axiale Baulänge auf. Beim Einbau in ein Kraftfahrzeug mit vorgegebenem Platzangebot kann dies zu Problemen führen. So ist das Platzangebot innerhalb des Motorraumes des Kraftfahrzeugs insbesondere dann sehr begrenzt, wenn das Doppelkupplungsgetriebe gemeinsam mit dem Motor quer zur Fahrrichtung eingebaut werden soll. Das Problem des begrenzten Platzangebots verschärft sich, da bei Schaltgetrieben ein Trend zu beobachten ist, die Anzahl der Vorwärtsgänge zu vergrößern. Ein zusätzlicher Vorwärtsgang bedeutet in der Regel ein weiteres Zahnrad, das auf einer der Eingangswellen angeordnet ist und die axiale Baulänge weiter vergrößert.

Aus der DE 198 50 549 ist ein Doppelkupplungsgetriebe mit nur einer Elektromaschine bekannt, die je nach Bedarf durch eine Umschaltvorrichtung auf die erste oder auf die zweite Eingangswelle geschaltet werden kann. Zwar kann durch eine derartige Umschaltvorrichtung eine Elektromaschine eingespart werden. Im Vergleich zu einem Doppelkupplungsgetriebe mit zwei Elektromaschinen, deren paralleler Betrieb beispielsweise bei maximaler Last vorgesehen ist, muss jedoch diese einzelne Elektromaschine größer dimensioniert werden, um eine Leistung bereitzustellen, die der Summe der Einzelleistungen der beiden Elektromaschinen entspricht. Eine derart große Elektromaschine kann jedoch auch wieder zu Packaging-Problemen führen.

Die US-A-2002/088290 offenbart die Merkmale des Oberbegriffs des Anspruchs 1.

Der Erfindung liegt daher die Aufgabe zugrunde, ein Doppelkupplungsgetriebe mit zwei Antriebseinheiten bereitzustellen, das trotz einer hohen Anzahl von Vorwärtsgängen eine vergleichsweise kleine axiale Baulänge aufweist.

Die der Erfindung zugrunde liegende Aufgabe wird durch das Doppelkupplungsgetriebe mit den Merkmalen des Anspruchs 1 gelöst. Bevorzugte Ausführungsformen können den Unteransprüchen entnommen werden.

Dadurch, das die erste Antriebseinheit koaxial zu der ersten und zweiten Kupplung angeordnet ist und die Kupplungen in radialer Richtung umgreift und dass die zweite Antriebseinheit eine Antriebswelle mit einer Drehachse aufweist, die von der Drehachse der Kupplungen verschieden ist, lässt sich ein Schaltgetriebe mit vergleichsweise kurzer axialer Baulänge realisieren. Die Anordnung der ersten Antriebseinheit hat praktisch keinen Einfluss auf die axiale Baulänge, wenn die axiale Ausdehnung der ersten Antriebseinheit geringer ist als die axiale Ausdehnung der Doppelkupplungsanordnung. Die erste Antriebseinheit schließt sich in radialer Richtung gesehen an die Doppelkupplungsanordnung an, wobei ein Innendurchmesser der ersten Antriebseinheit in etwa einem Außendurchmesser der Doppelkupplungsanordnung entspricht.

Da die Antriebswelle der zweiten Antriebseinheit nicht mit der Drehachse der beiden Kupplungen zusammenfällt, kann die zweite Antriebswelle von den Kupplungen und auch von der ersten Antriebseinheit räumlich getrennt angeordnet werden. Dabei ist die Anordnung der zweiten Antriebseinheit grundsätzlich frei wählbar.

In einem bevorzugten Ausführungsbeispiel verläuft die Drehachse der Antriebswelle der zweiten Antriebseinheit parallel beabstandet zur Drehachse der beiden Kupplungen. Eine derartige Anordnung der beiden Drehachsen erleichtert eine Ankopplung der zweiten Antriebseinheit an eine der beiden Eingangswellen bzw. an die wenigstens eine Ausgangswelle, die üblicherweise parallel zu den Eingangswellen verläuft.

In einem bevorzugten Ausführungsbeispiel sind die erste und die zweite Eingangswelle koaxial zu der Drehachse der Kupplungen angeordnet. Vorzugsweise ist dabei eine der Eingangswellen als Hohlwelle ausgebildet.

Die erste Antriebseinheit kann als Elektromaschine mit einem Stator und mit einem Rotor ausgebildet sein. Bei der erfindungsgemäßen Anordnung der ersten Antriebseinheit ist der ringförmige Rotor zwischen dem ringförmigen Stator und der Doppelkupplungsanordnung angeordnet.

In einem bevorzugten Ausführungsbeispiel ist die erste Antriebseinheit mit einer Eingangsseite der Doppelkupplungsanordnung verbunden. Soweit es sich bei der ersten Antriebseinheit um eine Elektromaschine mit Stator und Rotor handelt, ist in diesem Fall der Rotor drehfest mit dem Motor bzw. mit einer Kurbelwelle des Motors verbunden. Rotor und Kurbelwelle weisen folglich jeweils immer die gleiche Drehzahl auf.

Alternativ dazu kann die erste Antriebseinheit mit einer der Eingangswellen verbunden sein. In diesem Fall, wenn wieder eine Elektromaschine mit Stator und Rotor als Antriebseinheit zugrunde gelegt wird, ist der Rotor drehfest mit einer der Eingangswellen verbunden. Getriebetechnisch gesehen ist damit die erste Antriebseinheit vom Motor aus gesehen hinter der Doppelkupplungsanordnung geschaltet.

Vorzugsweise ist die zweite Antriebseinheit mit einer der Eingangswellen verbunden. In dem Ausführungsbeispiel, in dem die erste Antriebseinheit mit einer der Eingangswellen verbunden ist, sollte die zweite Antriebseinheit zweckmäßigerweise mit der anderen Eingangswelle verbunden sein. Dies eröffnet die Möglichkeit, die Drehzahl der beiden Eingangswellen über die jeweilige Antriebseinheit unabhängig voneinander zu steuern. So kann beispielsweise die Drehzahl einer Eingangswelle mit der Drehzahl der Ausgangswelle synchronisiert werden, wodurch die Gangschaltkupplungen als formschlüssige Kupplungen ohne Synchronisationseinheit ausgebildet sein können. Darüber hinaus kann durch die Antriebseinheiten auf die Eingangswellen ein Drehmoment zur Unterstützung des Motors geschaltet werden. Alternativ ist es auch möglich, dass die zweite Antriebseinheit anstatt mit einer Eingangswelle mit der Ausgangswelle verbunden ist.

Vorzugsweise ist auf der Antriebswelle der zweiten Antriebseinheit ein Zahnrad angeordnet, das mit einem Zahnrad auf einer der Eingangswellen kämmt. Dabei kann das Zahnrad auf der entsprechenden Eingangswelle ein Festrad oder ein Losrad eines Zahnradpaares sein, das zur Verbindung der Eingangswelle mit der Ausgangswelle vorgesehen ist. Dies spart ein gesondertes Zahnrad für die Anbindung der zweiten Antriebseinheit ein.

Alternativ dazu kann auf der Antriebswelle der Antriebseinheit ein Kettenrad angeordnet sein, das über eine Kette mit einem Kettenrad auf einer der Eingangswellen verbunden ist. Aufgrund der Kette (Länge, Verlauf) ist der Abstand der zweiten Antriebseinheit zu der Drehachse der Eingangswelle grundsätzlich frei wählbar.

Der Begriff "Kette" soll hier im Sinne von geschlossenem, umlaufenden Zugmittel verstanden werden. Korrespondierend dazu steht ein Kettenrad für ein Rad oder für eine Scheibe, die eine kraftschlüssige oder formschlüssige Verbindung des Zugmittels mit der Welle ermöglicht, die das Rad oder die Scheibe trägt.

Anhand der in den Figuren dargestellten Ausführungsbeispiele wird die Erfindung näher erläutert. Es zeigen:
- Figur 1: eine schematische Darstellung eines erfindungsgemäßen Ausführungsbeispiels von der Seite;
- Figur 2: schematisch das Ausführungsbeispiel der Figur 1 im Querschnitt; und
- Figur 3: eine schematische Darstellung einer Doppelkupplungsanordnung, die von der in der Figur 1 gezeigten Doppelkupplungsanordnung abweicht.

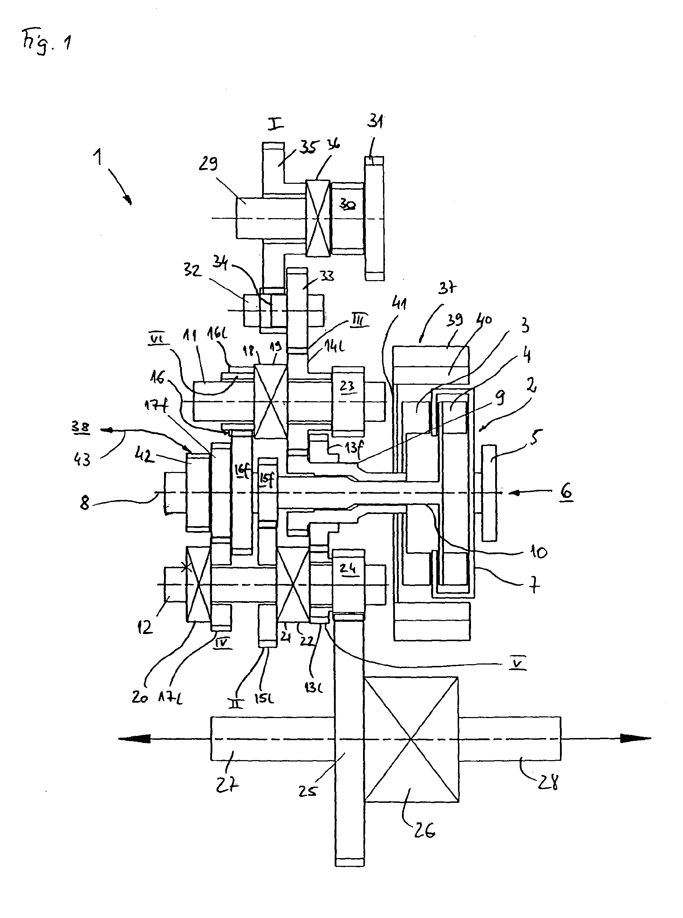

Figur 1 zeigt ein Doppelkupplungsgetriebe, das in seiner Gesamtheit mit 1 bezeichnet wird. Das Doppelkupplungsgetriebe 1 weist eine Doppelkupplungsanordnung 2 mit einer ersten Kupplung 3 und einer zweiten Kupplung 4 auf. An einem Flansch 5 lässt sich drehfest ein hier nur angedeuteter Motor 6 an eine Eingangsseite 7 der Doppelkupplungsanordnung 2 befestigen.

Die erste Kupplung 3 und die zweite Kupplung 4 weisen eine gemeinsame Drehachse 8 auf. Koaxial zu dieser Drehachse 8 sind eine erste Eingangswelle 9 und eine zweite Eingangswelle 10 angeordnet. Eingangswelle 9 ist als Hohlwelle ausgebildet. Die erste Kupplung 3 verbindet dabei in einem geschlossenen Zustand die erste Eingangswelle 9 mit der Eingangsseite 7 der Doppelkupplungsanordnung 2 bzw. mit dem Motor 6. Die zweite Kupplung 4 dient dazu, die zweite Eingangswelle 10 mit dem Motor 6 zu verbinden.

Das Doppelkupplungsgetriebe 1 weist des weiteren eine erste Ausgangswelle 11 und eine zweite Ausgangswelle 12 auf. Die jeweiligen Drehachsen der beiden Ausgangswellen 11, 12 verlaufen zur Drehachse 8 parallel, sind jedoch von ihr beabstandet. Zur Verbindung der beiden Eingangswellen 9, 10 mit den beiden Ausgangswellen 11, 12 sind fünf Zahnradpaare 13, 14, 15, 16, 17 vorgesehen. Jedes Zahnradpaar umfasst dabei jeweils ein Festrad und ein Losrad, wobei das Festrad mit dem Index f und das Losrad mit dem Index I belegt ist. Beispielsweise ist drehfest an der ersten Eingangswelle 9 ein Festrad 13f des Zahnradpaares 13 angeordnet, das mit einem Losrad 131 kämmt, das auf der zweiten Ausgangswelle 12 sitzt. Wie in Figur 1 zu erkennen ist, sind auf den Eingangswellen 9, 10 nur die Festräder 13f, 14f, 15f, 16f, 17f der Zahnradpaare 13 bis 17 angeordnet.

Auf den Ausgangswellen 11, 12 sind mehrere Gangschaltkupplungen 18, 19, 20, 21, 22 angeordnet. Die Gangschaltkupplungen sind hier nur schematisch durch Rechtecke mit eingezeichneten Diagonalen dargestellt, wobei teilweise zwei Gangschaltkupplungen durch lediglich ein Rechteck abgebildet werden. Beispielsweise dient die Gangschaltkupplung 18 dazu, das ihr zugeordnete Losrad 161 drehfest mit der ersten Ausgangswelle 11 zu verbinden. Ist eine derartige drehfeste Verbindung zwischen Losrad 161 und erster Ausgangswelle 11 hergestellt, kann das Zahnradpaar 16 ein Drehmoment von der zweiten Eingangswelle 10 auf die erste Ausgangswelle 11 übertragen.

Ist die Gangschaltkupplung 18 geschlossen bzw. eingerückt, ist ein sechster Vorwärtsgang des Doppelkupplungsgetriebes 1 eingelegt. Die einzelnen Vorwärtsgänge II, III, IV, V, VI, die jeweils durch eines der Zahnradpaare 13, 14, 15, 16, 17 festgelegt werden, werden durch die römischen Ziffern in der Figur 1 gekennzeichnet.

Über Zahnräder 23, 24, die jeweils drehfest mit der ersten Ausgangswelle 11 bzw. mit der zweiten Ausgangswelle 12 verbunden sind, kann ein an den Ausgangswellen 11, 12 anliegendes Drehmoment auf ein Ringzahnrad 25 übertragen werden. Das Ringzahnrad leitet dann dort anliegende Drehmoment auf ein Differential 26 weiter, das das Drehmoment auf die Achsen 27, 28 verteilt.

Neben der ersten Ausgangswelle 11 und der zweiten Ausgangswelle 12 umfasst das Doppelkupplungsgetriebe 1 eine weitere Ausgangswelle, eine dritte Ausgangswelle 29. Auch diese dritte Ausgangswelle 29 weist ein drehfest angeordnetes Zahnrad 30 auf, das mit dem Ringzahnrad 25 in Eingriff steht. Darüber hinaus ist die dritte Ausgangswelle 29 mit einem Parkrad 31 drehfest verbunden, durch das über das Zahnrad 30 das Ringzahnrad 25 arretiert werden kann. Die Zahnräder 23, 24, 30 weisen jeweils einen gleichen Durchmesser auf und liegen in einer gemeinsamen Ebene.

Zwischen der ersten Ausgangswelle 11 und der dritten Ausgangswelle 29 ist eine Zwischenwelle 32 angeordnet. Die Zwischenwelle 32 trägt ein Zahnrad 33, das mit dem Losrad 14l kämmt. Des weiteren ist auf der Zwischenwelle 32 ebenfalls drehfest ein Zahnrad 34 angeordnet. das mit einem Losrad 35 auf der dritten Ausgangswelle 29 kämmt. Durch eine dem Losrad 35 zugeordnete Gangschaltkupplung 36 lässt sich das Losrad 35 drehfest mit der dritten Ausgangswelle 29 verbinden. Bei eingerückter Gangschaltkupplung 36 ist der erste Vorwärtsgang I des Doppelkupplungsgetriebes 1 eingelegt.

Um Drehmoment im ersten Vorwärtsgang I von der zweiten Eingangswelle 9 auf die dritte Ausgangswelle 29 zu übertragen, wird die Gangschaltkupplung 19 geöffnet bzw. muss diese geöffnet sein. In diesem Fall überträgt das Losrad 141 kein Drehmoment auf die erste Ausgangswelle 11, sondern dient lediglich der Drehmomentübertragung von dem Festrad 14f auf das Zahnrad 33, durch das das entsprechende Drehmoment über die Zwischenwelle 32, das Zahnrad 34, das nunmehr drehfest verbundene Losrad 35 auf die dritte Ausgangswelle 29 geleitet wird. Ist hingegen der dritte Vorwärtsgang III eingelegt, überträgt das Losrad 14 I aufgrund der nun geschlossenen Gangschaltkupplung 19 ein Drehmoment auf die erste Ausgangswelle 11. Gangschaltkupplung 36 muss dabei geöffnet sein.

Des weiteren umfasst das Doppelkupplungsgetriebe 1 eine erste Antriebseinheit 37 und eine zweite Antriebseinheit 38. Beide Antriebseinheiten 37, 38 sind als Elektromaschinen ausgebildet. Die erste Antriebseinheit 37 bzw. die erste Elektromaschine 37 ist koaxial zu den Kupplungen 3, 4 angeordnet und umgreift diese in radialer Richtung. Die axialen Ausdehnungen der ersten Elektromaschine 37 entsprechen dabei in etwa den axialen Ausmaßen der Kupplungen 3, 4 bzw. der Doppelkupplungsanordnung 2, so dass die Elektromaschine 37 keinen oder nur einen sehr kleinen Einfluss auf die axiale Baulänge des Doppelkupplungsgetriebes 1 hat.

Die erste Elektromaschine 37 weist einen Stator 39 und einen Rotor 40 auf. Stator 39 und Rotor 40 sind jeweils ringförmig ausgebildet, wobei der Stator 39 den Rotor 40 in radialer Richtung von außen umgreift. Der Rotor 40 wiederum liegt in radialer Richtung gesehen außen an der Doppelkupplungsanordnung 2 an. Der Rotor 40 ist über eine scheibenförmige Verbindung 41 drehfest mit der ersten Eingangswelle 9 verbunden.

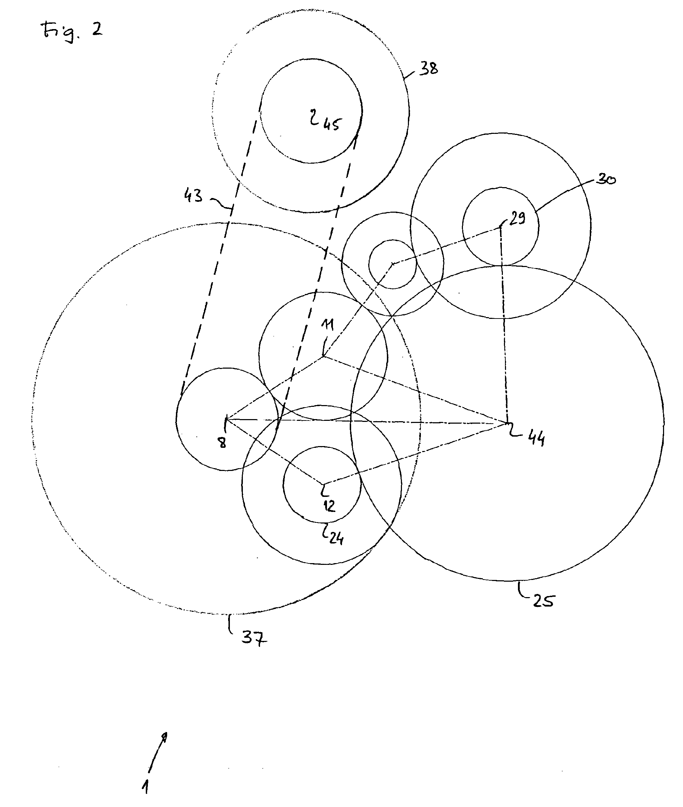

Die zweite Antriebseinheit 38 bzw. die zweite Elektromaschine 38 ist über ein Zahn- oder Kettenrad 42 und über ein geschlossenes Zugmittel in Form einer Kette 43 mit der zweiten Eingangswelle 10 verbunden (vgl. Figur 2). In Figur 1 ist die Kette 43 als Doppelpfeil schematisch dargestellt, der anzeigen soll, dass eine Verbindung zwischen der zweiten Elektromaschine 38 und der zweiten Eingangswelle 10 mit dem darauf angeordneten Zahnrad 42 besteht.

Die Elektromaschinen 37, 38 können bei dem Betrieb des Doppelkupplungsgetriebes 1 verschiedenste Aufgaben erfüllen. Beispielsweise sind sie geeignet, die Drehzahl der jeweils mit ihr verbundenen Eingangswelle entweder mit der Drehzahl einer Ausgangswelle oder mit einer Drehzahl des Motors 6 zu synchronisieren. Diese Synchronisationen ermöglichen es, die Gangschaltkupplungen im Doppelkupplungsgetriebe 1, die erste Kupplung 3 und die zweite Kupplung 4 als formschlüssige Kupplungen ohne jeglichen Schlupfbetrieb auszubilden. Darüber hinaus können die Elektromaschinen 37, 38 zum Anwerfen oder Starten des Motors 6 oder zu dessen Unterstützung bei hoher Last verwendet werden. Beide Elektromaschinen 37, 38 können sowohl generatorisch als auch motorisch betrieben werden.

Das Doppelkupplungsgetriebe 1 sieht keinen mechanischen Rückwärtsgang vor. Ein Rückwärtsfahren des mit diesem Getriebe ausgestatteten Kraftfahrzeugs wird dadurch realisiert, dass einer der beiden Elektromaschinen 37, 38 bzw. beide Elektromaschinen in einem Drehsinn rotieren, der der Drehung des Motors 6 entgegengerichtet ist. Beispielsweise kann das Drehmoment der ersten Elektromaschine 37 zum Rückwärtsfahren des Fahrzeuges verwendet werden, wobei der Kraftfluss über die Zahnräder geleitet wird, die auch beim ersten Vorwärtsgang I unter Last stehen.

Aus Figur 2 ist zu entnehmen, wie die einzelnen Wellen 9, 10, 11, 12, 32, 29 und eine Drehachse 44 des Ringzahnrads 25 zueinander angeordnet sind. Des weiteren wird es deutlich, dass eine Drehachse 45 der zweiten Elektromaschine 38 von der Drehachse 8 beabstandet angeordnet ist.

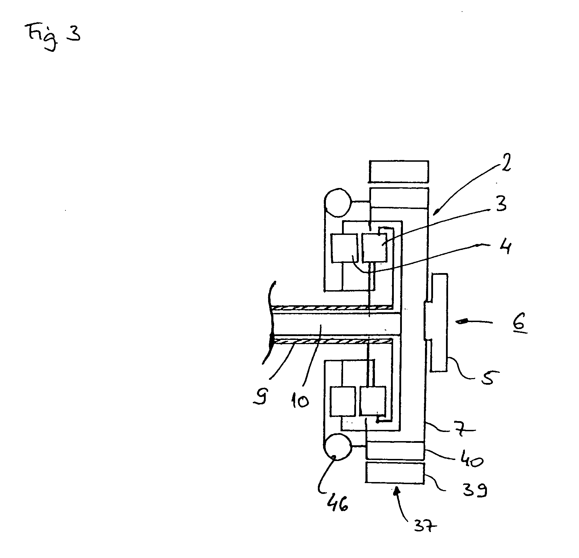

Figur 3 zeigt eine Variante der Doppelkupplungsanordnung 2 zusammen mit der ersten Elektromaschine 37, die die Erstgenannte in radialer Richtung umgreift. Während im Ausführungsbeispiel der Figur 1 der Rotor 40 drehfest mit der ersten Eingangswelle 9 verbunden ist, ist hier der Rotor 40 drehfest mit der Eingangsseite 7 der Doppelkupplungsanordnung 2 verbunden. Dies bedeutet, dass über den Flansch 5 der Rotor 40 immer mit der Drehzahl des Motors 6 rotiert. Zwischen dem Rotor 40 und den beiden Kupplungen 9, 10 ist ein Torsionsdämpfer 46 angeordnet.

### Bezugszeichenliste

- 1: Doppelkupplungsgetriebe
- 2: Doppelkupplungsanordnung
- 3: erste Kupplung
- 4: zweite Kupplung
- 5: Flansch
- 6: Motor
- 7: Eingangsseite
- 8: Drehachse
- 9: erste Eingangswelle
- 10: zweite Eingangswelle
- 11: erste Ausgangswelle
- 12: zweite Ausgangswelle
- 13: Zahnradpaar
- 14: Zahnradpaar
- 15: Zahnradpaar
- 16: Zahnradpaar
- 17: Zahnradpaar
- 18: Gangschaltkupplung
- 19: Gangschaltkupplung
- 20: Gangschaltkupplung
- 21: Gangschaltkupplung
- 22: Gangschaltkupplung
- 23: Zahnrad
- 24: Zahnrad
- 25: Ringzahnrad
- 26: Differential
- 27: Achse
- 28: Achse
- 29: dritte Ausgangswelle
- 30: Zahnrad
- 31: Parkzahnrad
- 32: Zwischenwelle
- 33: Zahnrad
- 34: Zahnrad
- 35: Losrad
- 36: Gangschaltkupplung
- 37: erste Antriebseinheit
- 38: zweite Antriebseinheit
- 39: Stator
- 40: Rotor
- 41: Verbindung
- 42: Zahnrad
- 43: Kette
- 44: Drehachse
- 45: Drehachse
- 46: Torsionsdämpfer

## Patentansprüche

1. Doppelkupplungsgetriebe (1), insbesondere für ein Kraftfahrzeug,
mit einer Doppelkupplungsanordnung (2), die eine erste Kupplung (3) und eine zweite Kupplung (4) umfasst, wobei die erste Kupplung (3) und die zweite Kupplung (4) eine gemeinsame Drehachse (8) aufweisen;
mit einer ersten Eingangswelle (9) und einer zweiten Eingangswelle (10), wobei sich die erste Eingangswelle (9) über die erste Kupplung (3) und die zweite Eingangswelle (10) über die zweite Kupplung (4) mit einem Motor (6) verbinden lassen;
mit mehreren schaltbaren Zahnradpaaren zum Verbinden der Eingangswellen (9, 10) mit wenigstens einer Ausgangswelle (11, 12, 29); und
mit einer ersten Antriebseinheit (37) und einer zweiten Antriebseinheit. (38), durch die ein serieller und/oder paralleler Hybridmodus des Doppelkupplungsgetriebes (1) realisierbar ist, und wobei
die erste Antriebseinheit (37) koaxial zu der ersten und zweiten Kupplung (3, 4) angeordnet ist, **dadurch gekennzeichnet dass** die erste Antriebseinheit (37) die Kupplungen (3, 4) in radialer Richtung umgreift und dass die zweite Antriebseinheit (38) eine Antriebswelle mit einer Drehachse (44) aufweist, die von der Drehachse (8) der Kupplungen (3,4) verschieden ist.

2. Doppelkupplungsgetriebe (1) nach Anspruch 1, **dadurch gekennzeichnet, dass** die Drehachse (44) der Antriebswelle der zweiten Antriebseinheit (38) parallel beabstandet zur Drehachse (8) der Kupplungen (3, 4) verläuft.

3. Doppelkupplungsgetriebe (1) nach Anspruch 1 oder 2, **dadurch gekennzeichnet, dass** die erste und die zweite Eingangswelle (9,10) koaxial zu der Drehachse (8) der Kupplungen (3, 4) angeordnet sind.

4. Doppelkupplungsgetriebe (1) nach einem der Ansprüche 1 bis 3, **dadurch gekennzeichnet, dass** die erste Antriebseinheit (37) als Elektromaschine mit einem Stator (39) und einem Rotor (40) ausgebildet ist.

5. Doppelkupplungsgetriebe (1) nach einem der Ansprüche 1 bis 4, **dadurch gekennzeichnet, dass** die erste Antriebseinheit (37) mit einer Eingangsseite (7) der Doppelkupplungsanordnung (2) verbunden ist.

6. Doppelkupplungsgetriebe (1) nach Anspruch 5, **dadurch gekennzeichnet, dass** der Rotor (40) der ersten Antriebseinheit (37) drehfest mit einem drehbaren Kupplungsgehäuse der Doppelkupplungsanordnung (2) verbunden ist.

7. Doppelkupplungsgetriebe (1) nach einem der Ansprüche 1 bis 4, **dadurch gekennzeichnet, dass** die erste Antriebseinheit (37) mit einer der Eingangswellen (9, 10) verbunden ist.

8. Doppelkupplungsgetriebe (1) nach Anspruch 7, **dadurch gekennzeichnet, dass** der Rotor (40) der ersten Antriebseinheit (37) drehfest mit einer der Eingangswellen (9, 10) verbunden ist.

9. Doppelkupplungsgetriebe (1) nach einem der Ansprüche 1 bis 8, **dadurch gekennzeichnet, dass** die zweite Antriebseinheit (38) mit einer der Eingangswellen (9, 10) verbunden ist.

10. Doppelkupplungsgetriebe (1) nach Anspruch 9, **dadurch gekennzeichnet, dass** auf der Antriebswelle der zweiten Antriebseinheit (38) ein Zahnrad angeordnet ist, das mit einem Zahnrad auf einer der Eingangswellen (9, 10) kämmt.

11. Doppelkupplungsgetriebe (1) nach Anspruch 9, **dadurch gekennzeichnet, dass** auf der Antriebswelle der zweiten Antriebseinheit (38) ein Kettenrad angeordnet ist, das über eine Kette (43) mit einem weiteren Kettenrad (42) auf einer der Eingangswellen (9, 10) verbunden ist.

## Claims

1. Twin-clutch transmission (1), in particular for a motor vehicle, with a twin-clutch arrangement (2) which comprises a first clutch (3) and a second clutch (4), the first clutch (3) and the second clutch (4) having a common axis of rotation (8); with a first input shaft (9) and a second input shaft (10), the first input shaft (9) being connectable to an engine (6) via the first clutch (3) and the second input shaft (10) being connectable to the engine (6) via the second clutch (4); with a number of engageable gearwheel pairs for connecting the input shafts (9, 10) to at least one output shaft (11, 12, 29); and with a first drive unit (37) and a second drive unit (38) by means of which a serial and/or parallel hybrid mode of the twin-clutch transmission (1) can be brought about, and the first drive unit (37) being arranged coaxially with the first and second clutches (3, 4), **characterized in that** the first drive unit (37) surrounds the clutches (3, 4) in the radial direction and **in that** the second drive unit (38) has a drive shaft with an axis of rotation (44) which is different from the axis of rotation (8) of the clutches (3, 4).

2. Twin-clutch transmission (1) according to Claim 1, **characterized in that** the axis of rotation (44) of the drive shaft of the second drive unit (38) runs parallel at a distance to the axis of rotation (8) of the clutches (3, 4).

3. Twin-clutch transmission (1) according to Claim 1 or 2, **characterized in that** the first and the second input shafts (9, 10) are arranged coaxially with the axis of rotation (8) of the clutches (3, 4).

4. Twin-clutch transmission (1) according to one of claims 1 to 3, **characterized in that** the first drive unit (37) is designed as an electric machine with a stator (39) and a rotor (40).

5. Twin-clutch transmission (1) according to one of Claims 1 to 4, **characterized in that** the first drive unit (37) is connected to an input side (7) of the twin-clutch arrangement (2).

6. Twin-clutch transmission (1) according to Claim 5, **characterized in that** the rotor (40) of the first drive unit (37) is connected in a rotationally fixed manner to a rotatable clutch housing of the twin-clutch arrangement (2).

7. Twin-clutch transmission (1) according to one of Claims 1 to 4, **characterized in that** the first drive unit (37) is connected to one of the input shafts (9, 10).

8. Twin-clutch transmission (1) according to Claim 7, **characterized in that** the rotor (40) of the first drive unit (37) is connected to one of the input shafts (9, 10) in a rotationally fixed manner.

9. Twin-clutch transmission (1) according to one of Claims 1 to 8, **characterized in that** the second drive unit (38) is connected to one of the input shafts (9, 10).

10. Twin-clutch transmission (1) according to Claim 9, **characterized in that** a gearwheel which meshes with a gearwheel on one of the input shafts (9, 10) is arranged on the drive shaft of the second drive unit (38).

11. Twin-clutch transmission (1) according to Claim 9, **characterized in that** a chain wheel which is connected via a chain (43) to a further chain wheel (42) on one of the input shafts (9, 10) is arranged on the drive shaft of the second drive unit (38).

## Revendications

1. Boîte de vitesses à double embrayage (1), notamment pour un véhicule automobile,
avec un dispositif de double embrayage (2), comprenant un premier embrayage (3) et un deuxième embrayage (4), le premier embrayage (3) et le deuxième embrayage (4) comprenant un axe de rotation (8) commun ;
avec un premier arbre d'entrée (9) et un deuxième arbre d'entrée (10), le premier arbre d'entrée (9) étant susceptible d'être relié via le premier embrayage (3) et le deuxième arbre d'entrée (10) étant susceptible d'être relié via le deuxième embrayage (4) avec un moteur (6) ;
avec plusieurs paires de roues embrayables pour relier les arbres d'entrée (9, 10) avec au moins un arbre de sortie (11, 12, 29) ; et
avec une première unité d'entraînement (37) et une deuxième unité d'entraînement (38), permettant de réaliser un mode hybride sériel et/ou parallèle de la boîte de vitesses à double embrayage (1), et
la première unité d'entraînement (37) étant disposée de façon coaxiale par rapport au premier et au deuxième embrayages (3, 4), **caractérisée en ce que** la première unité d'entraînement (37) entoure les embrayages (3, 4) en direction radiale et **en ce que** la deuxième unité d'entraînement (38) comporte un arbre primaire avec un axe de rotation (44), qui est différent de l'axe de rotation (8) des embrayages (3, 4).

2. Boîte de vitesses à double embrayage (1) selon la revendication 1, **caractérisée en ce que** l'axe de rotation (44) de l'arbre primaire de la deuxième unité d'entraînement (38) s'étend à la parallèle, avec une distance, par rapport à l'axe de rotation (8) des embrayages (3, 4).

3. Boîte de vitesses à double embrayage (1) selon la revendication 1 ou 2, **caractérisée en ce que** le premier et le deuxième arbres d'entrée (9, 10) sont disposés de façon coaxiale par rapport à l'axe de rotation (8) des embrayages (3, 4).

4. Boîte de vitesses à double embrayage (1) selon l'une quelconque des revendications 1 à 3, **caractérisée en ce que** la première unité d'entraînement (37) est conçue sous la forme d'une machine électrique avec un stator (39) et un rotor (40) .

5. Boîte de vitesses à double embrayage (1) selon l'une quelconque des revendications 1 à 4, **caractérisée en ce que** la première unité d'entraînement (37) est reliée avec un côté entrée (7) du dispositif de double embrayage (2).

6. Boîte de vitesses à double embrayage (1) selon la revendication 5, **caractérisée en ce que** le rotor (40) de la première unité d'entraînement (37) est relié de façon solidaire en rotation avec un carter d'embrayage rotatif du dispositif de double embrayage (2).

7. Boîte de vitesses à double embrayage (1) selon l'une quelconque des revendications 1 à 4, **caractérisée en ce que** la première unité d'entraînement (37) est reliée avec l'un des arbres d'entrée (9, 10).

8. Boîte de vitesses à double embrayage (1) selon la revendication 7, **caractérisée en ce que** le rotor (40) de la première unité d'entraînement (37) est relié de façon solidaire en rotation avec l'un des arbres d'entrée (9, 10).

9. Boîte de vitesses à double embrayage (1) selon l'une quelconque des revendications 1 à 8, **caractérisée en ce que** la deuxième unité d'entraînement (38) est reliée à l'un des arbres d'entrée (9, 10).

10. Boîte de vitesses à double embrayage (1) selon la revendication 9, **caractérisée en ce que** sur l'arbre primaire de la deuxième unité d'entraînement (38) est disposée une roue dentée, qui s'engrène dans une roue dentée sur l'un des arbres d'entrée (9, 10).

11. Boîte de vitesses à double embrayage (1) selon la revendication 9, **caractérisée en ce que** sur l'arbre primaire de la deuxième unité d'entraînement (38) est disposée une roue dentée à chaîne, qui par l'intermédiaire d'une chaîne (43) est reliée avec une autre roue dentée à chaîne (42), sur l'un des arbres d'entrée (9, 10).
